# EUROPÄISCHE PATENTSCHRIFT

(11) **EP 1 294 533 B1**
(45) Veröffentlichungstag und Bekanntmachung des Hinweises auf die Patenterteilung: **25.08.2004**
(21) Anmeldenummer: 01965038.1
(22) Anmeldetag: 26.06.2001
(51) Int. Cl.: B24B 13/00, B24B 9/14, B24B 41/00, B25J 18/04

(54) **VORRICHTUNG ZUM LADEN UND ENTLADEN OPTISCHER WERKSTÜCKE**
DEVICE FOR LOADING AND UNLOADING OPTICAL WORKPIECES
DISPOSITIF PERMETTANT DE CHARGER ET DE DECHARGER DES PIECES OPTIQUES

(30) Priorität: 26.06.2000 DE 10029966
(43) Veröffentlichungstag der Anmeldung: 26.03.2003
(73) Patentinhaber: Loh Optikmaschinen AG, 35578 Wetzlar (DE)
(72) Erfinder: DIEHL, Joachim, 35398 Giessen (DE); GROH, Herbert, 35583 Wetzlar-Garbenheim (DE); BECKER, Bernd, 35232 Holzhausen (DE)
(74) Vertreter: Oppermann, Mark, Dipl.-Ing.
(86) Internationale Anmeldenummer: PCT/EP2001/007283
(87) Internationale Veröffentlichungsnummer: WO 2002/000392

(56) Entgegenhaltungen:
- DE-A- 2 809 532
- DE-A- 3 904 374
- DE-C- 19 830 365
- US-A- 3 140 567
- US-A- 5 901 624

## Beschreibung

### TECHNISCHES GEBIET

Die vorliegende Erfindung bezieht sich entsprechend dem Oberbegriff des Patentanspruchs 1 auf eine Vorrichtung zum Laden und Entladen optischer Werkstücke, insbesondere optischer Linsen, für eine Optikmaschine, mit einem um eine Achse schwenkbar angetriebenen Ladearm, der in gesteuerten Bewegungsabläufen zwischen einem Werkstückmagazin und der Bearbeitungsposition auf der Optikmaschine schwenkbar ist und an seinem äußeren Ende mit einer Einrichtung zum Aufnehmen und zum Absetzen von Werkstücken versehen ist. Wenn auch nachfolgend stets vom Laden bzw. Entladen von Werkstücken die Rede ist, so ist die Vorrichtung doch gleichermaßen auch für den Werkzeugwechsel geeignet.

### STAND DER TECHNIK

Automatische Beladungssysteme für Optikmaschinen gewinnen angesichts zunehmender Personalkosten mehr und mehr an Bedeutung. Derartige Beladungssysteme müssen einer großen Werkstückvielfalt, hohen Genauigkeitsanforderungen und auch kleinen Losgrößen Rechnung tragen können. Nach dem Stand der Technik lassen sich drei verschiedene Konstruktionskonzepte unterscheiden, nämlich (1) Vorrichtungen mit kurvengesteuerten Ladearmen, (2) Vorrichtungen mit pneumatisch über Zylinder und Schwenkrotoren angetriebenen Ladearmen und (3) Vorrichtungen, welche zum Laden bzw. Entladen die an Optikmaschinen vorhandenen CNC-Achsen nutzen.
(1) Kurvengesteuerte Ladearme sind seit Jahrzehnten im Einsatz (z.B. DE-PS 12 38 802). Derartige kurvengesteuerte Ladesysteme erfordern einen hohen Rüst- und Justageaufwand, bieten keine Möglichkeit zur Beeinflussung der Geschwindigkeit der Bewegung, was bei unterschiedlichen Werkstückgewichten sehr wichtig ist, und können nur festgelegte, nicht veränderbare Be- und Entladepositionen anfahren.
(2) Pneumatisch über Zylinder und Schwenkrotoren angetriebene Ladearme mit mechanischen Anschlägen und Stoßdämpfern finden bis heute an verschiedenen Optikmaschinen Verwendung. Bekannte Automationssysteme für Optikmaschinen (z.B. EP 0 090 752 A1, EP 0 175 431 B1, US 2,933,863) arbeiten in vorrichtungs- und wartungstechnisch aufwendiger Weise mit pneumatischen Antriebselementen. Diese Systeme sind wegen der Kompressibilität der Druckluft und den an den Pneumatikzylindern auftretenden Stick-Slip-Effekten mit Nachteilen behaftet. Zwar läßt sich bei diesen Systemen die Kraft, mit denen das Ladesystem in Bewegung gesetzt wird, relativ einfach durch eine Begrenzung des Drucks der Druckluft beschränken, Schwierigkeiten treten jedoch bei einer äußeren Bewegungsbehinderung des Ladearms auf. Wenn diese Behinderung entfällt, resultieren nämlich sehr schnelle Schwenk- oder Linearbewegungen, die entweder zum Abschleudern der Werkstücke oder zumindest aber zu einer Verlagerung der Werkstücke und damit zu einer Veränderung der Werkstückposition führen. Weiterhin verstellen sich bei pneumatisch betriebenen Ladesystemen die Anschläge durch Verschleiß und/oder Vibrationen. Die Bewegungsgeschwindigkeit wird durch äußere Einflüsse wie z.B. den Schmierzustand von Mechanik und Druckluft, die Verschmutzung der beteiligten mechanischen Elemente oder auch durch die Höhe des Drucks der Druckluft beeinflußt. Dies ist besonders kritisch beim Laden von großen, empfindlichen Werkstücken. Zusammenfassend läßt sich feststellen, daß die Genauigkeit und Zuverlässigkeit des Einlegens von Werkstücken mittels derartiger Ladesysteme verhältnismäßig gering ist. Hinzu kommt, daß auch mit diesen Systemen nur wenige festgelegte Positionen vom Ladearm angefahren werden können.
(3) In jüngster Zeit wird zunehmend versucht, die Beschickung von Optikmaschinen unter Verwendung der ohnehin vorhandenen CNC-Achsen der Optikmaschine zu bewerkstelligen (z.B. DE 198 25 922 A1). Die Schlitten der horizontalen Bewegungsachsen werden dabei über längere Wege gefahren, wobei eine an einem der Schlitten angebrachte Kolben-Zylinder-Anordnung mit Sauger die Werkstücke aus einem außerhalb des Bearbeitungsraums der Optikmaschine angeordneten Magazin entnimmt. Diese Konzeption ist zwar flexibel und arbeitet verhältnismäßig positionsgenau, jedoch müssen große Massen über lange Wege verfahren werden, was verhältnismäßig lange Wechselzeiten zur Folge hat. Außerdem können die CNC-Achsen erst dann für die Beschickungsvorgänge herangezogen werden, wenn die eigentlichen Bearbeitungsvorgänge auf der Optikmaschine zuvor beendet wurden. Eine Vorpositionierung einer zu bearbeitenden optischen Linse nahe dem Futter der Werkstückspindel während der Bearbeitung einer anderen Linse ist nicht möglich. Hinzu kommt, daß die erforderlichen längeren Linearachsen die Herstellkosten derartiger Optikmaschinen beträchtlich erhöhen und zudem zu größeren und damit schwereren Maschinen führen.

Zum Stand der Technik, der sich nicht einschlägig mit Optikmaschinen beschäftigt, seien schließlich noch die Druckschriften DE 40 37 773 A1, DE 198 30 365 C1 und US 5,901,624 genannt.

Die DE 198 30 365 C1 offenbart einen Hubdrehantrieb mit einer Hubantriebseinheit, die mit einer Drehantriebseinheit gekoppelt ist. Hierbei umfaßt die Hubantriebseinheit einen in einem Hubantriebsgehäuse angeordneten Getriebemotor zum Hubantrieb einer Gewindespindel und die Drehantriebseinheit einen in einem Drehantriebsgehäuse angeordneten Getriebemotor zum Drehantrieb einer Abtriebswelle, die koaxial zueinander angeordnet und durch eine Kopplungseinheit zum Übertragen des Hubs auf die Abtriebswelle miteinander verbunden sind. Die Abtriebswelle selbst kann mit einem Roboterarm verbunden sein, der einen Sauger zum Aufnehmen und zum Absetzen von z.B. Werkstücken trägt.

Aus der DE 40 37 773 A1 ist ein Schwenkarmroboter mit einer Hub-Dreheinheit bekannt, die eine Pinole und eine daran angeordnete Greiferaufnahme aufweist, welche um eine Drehachse drehbar und in vertikaler Richtung längsverschiebbar ist. Die Bauelemente, die die translatorische und die rotatorische Bewegung der Pinole bewirken, werden in diesem Stand der Technik nicht näher beschrieben.

Die US 5,901,624 schließlich offenbart eine Vorrichtung zum Laden und Entladen von Werkstücken, mit einem um eine Achse schwenkbar angetriebenen Ladearm, der in gesteuerten Bewegungsabläufen zwischen einem Werkstückmagazin und einer Werkstück-Bearbeitungsposition schwenkbar ist und an seinem äußeren Ende mit einer Einrichtung zum Aufnehmen und zum Absetzen von Werkstücken versehen ist. Die Schwenkachse des Ladearms ist hierbei die Mittelachse einer in beiden Drehrichtungen drehend und in beiden Achsrichtungen linear hubbeweglich durch Antriebselemente antreibbaren sowie dreh- und verschiebbar in Führungselementen geführten Spindel, an welcher der Ladearm befestigt ist. Dafür ist die Spindel sowohl als Keilwelle (Keilnuten) als auch als Gewindespindel (Gewinde) ausgebildet und durch zwei ortsfest angebrachte, den Führungselementen zugeordnete und drehbar gelagerte Mutterelemente hindurchgeführt, von denen ein Mutterelement mit der Keilwelle (Keilnuten) und das andere Mutterelement mit der Gewindespindel (Gewinde) eingreift, wobei die Mutterelemente über die Antriebselemente einzeln oder gleichzeitig, gegenläufig oder gleichläufig drehend antreibbar sind.

Der vorliegenden Erfindung liegt die Aufgabe zugrunde, eine Vorrichtung zum Laden und Entladen optischer Werkstücke, insbesondere optischer Linsen, bereitzustellen, welche unter Vermeidung der aufgeführten Nachteile der bisherigen Systeme einen kompakten und einfachen Aufbau besitzt, mit hoher Lade- und Entladegenauigkeit zuverlässig arbeitet sowie flexibel zum Einsatz kommen kann.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 10.

### DARSTELLUNG DER ERFINDUNG

Gemäß der Erfindung weist eine Vorrichtung zum Laden und Entladen optischer Werkstücke, insbesondere optischer Linsen, für eine Optikmaschine einen um eine Achse schwenkbar angetriebenen Ladearm auf, der in gesteuerten Bewegungsabläufen zwischen einem Werkstückmagazin und der Bearbeitungsposition auf der Optikmaschine schwenkbar ist und an seinem äußeren Ende mit einer Einrichtung zum Aufnehmen und zum Absetzen von Werkstücken versehen ist, wobei die Schwenkachse des Ladearms die Mittelachse einer in beiden Drehrichtungen drehend und in beiden Achsrichtungen linear hubbeweglich durch Antriebselemente antreibbaren sowie dreh- und verschiebbar in Führungselementen geführten Spindel ist, an welcher der Ladearm befestigt ist, wofür die Spindel sowohl als Keilwelle (Keilnuten) als auch als Gewindespindel (Gewinde) ausgebildet ist und durch zwei ortsfest angebrachte, die Führungselemente bildende und drehbar gelagerte Mutterelemente hindurchgeführt ist, von denen ein Mutterelement mit der Keilwelle (Keilnuten) und das andere Mutterelement mit der Gewindespindel (Gewinde) eingreift, wobei die Mutterelemente über die Antriebselemente einzeln oder gleichzeitig, gegenläufig oder gleichläufig drehend antreibbar sind, und wobei die Spindel mit dem Ladearm, ihren Antriebselementen und ihren Führungselementen an einem autarken Systemträger angebracht ist, der in zu der Werkstückspindel der Optikmaschine definierter und justierbarer Lage an der Optikmaschine andockbar ist.

Für die Erfindung wesentlich ist somit die Verwendung einer mit mehreren sich überlagernden Bewegungsfreiheitsgraden ausgestatteten besonderen Spindel, deren Bewegungsabläufe vorzugsweise unabhängig von der Steuerung der auf der Optikmaschine ablaufenden Bearbeitungsvorgänge frei programmiert werden können. Diese Spindel führt und steuert in kompakter, einfacher und stabiler Weise alle Bewegungen des Ladearms, d.h. sowohl dessen Hub- als auch dessen Rotationsbewegungen, ohne daß wegbegrenzende Anschläge zum Einsatz gelangen. Auf diese Weise können auch beliebige Zwischenpositionen von dem Ladearm angefahren werden, an denen die Vorrichtung mit Einrichtungen für zusätzliche Arbeitsvorgänge, wie Vorzentrieren, Wenden bzw. Drehen, Messen oder Waschen der Linse ausgerüstet werden kann. Da der Ladearm in jede Richtung über beliebig lange oder kurze Schwenk- bzw. Hubwege geführt werden kann, können alle Bewegungsabläufe weg- und damit zeitoptimiert erfolgen. Eine für die Zwecke der Erfindung einsetzbare Spindel ist im Handel unter der Bezeichnung "Ball-Screw-Spline" des Typs BNS von der Firma THK Co., Ltd., Tokio, Japan erhältlich. Erwähnt sei in diesem Zusammenhang schließlich noch, daß es sich bei der Einrichtung, die am Ladearm zum Aufnehmen und zum Absetzen von Werkstücken vorgesehen ist, beispielsweise um ein vakuumbetriebenes, ggf. zur Aufnahme verschieden dicker Linsen gegen Federkraft höhenverstellbares Saugelement oder ein druckluftbetriebenes Greif- oder Spannelement handeln kann.

Weiterhin ist die Spindel mit dem Ladearm, ihren Antriebselementen und ihren Führungselementen an einem autarken Systemträger bzw. Rahmen angebracht, der in zu der Werkstückspindel der Optikmaschine definierter und justierbarer Lage an der Optikmaschine andockbar ist. Vorzugsweise befindet sich dabei die Werkstückspindel der Optikmaschine auf dem Schwenkkreis der Einrichtung des Ladearms. Somit kann die Vorrichtung an beliebigen Optikmaschinen, wie z.B. Feinschleif-, Polier-, Zentrier- oder Linsenrandbearbeitungsmaschinen - auch durch nachträglichen Anbau - als Ladesystem zum Einsatz gelangen. Der Rahmen der Vorrichtung wird dabei vorzugsweise an der Vorderseite der jeweiligen Optikmaschine angedockt und kann als autarker Systemträger alle mechanischen Elemente, wie auch die elektronische Steuerung, die Bedien- und Anzeigeelemente (Tastatur/Bildschirm) und die Pneumatik für die am Ladearm vorgesehene Einrichtung zum Aufnehmen und zum Absetzen von Werkstücken mitbringen bzw. beinhalten. Der Rahmen der Vorrichtung kann in kompakter Bauweise auch eine zylindrische Metallhülse aufweisen, welche die erfindungsgemäßen Mutterelemente aufnimmt und diese somit vor Verschmutzung schützt.

Im weiteren Verfolg des Erfindungsgedankens kann der Rahmen an seinem unteren Ende über Schwenkzapfen und an seinem oberen Ende über zur einfachen Herbeiführung der Achsparallelität zwischen der Spindel und der Werkstückspindel der Optikmaschine justierbare Anschläge und Schrauben an die Optikmaschine andockbar sein. Dadurch kann die Vorrichtung nach Lösen der Schrauben nach vorne weggeschwenkt werden, wodurch z.B. die Werkstückspindel der Optikmaschine für Wartungs- und Reparaturzwecke ungehindert durch die Vorrichtung gut zugänglich ist. Als Alternative oder in Ergänzung dazu kann der Rahmen auch seitlich verschwenkbar an der Optikmaschine angelenkt sein. Hierbei können ebenfalls justierbare Anschläge und Schrauben vorgesehen sein, die dazu dienen, den Drehachsenabstand von Spindel und Werkstückspindel einzustellen.

In einer zweckmäßigen Ausgestaltung der Vorrichtung ist das erste der beiden Mutterelemente mittels des zugehörigen Stützlagers oben am Rahmen befestigt, während das zweite Mutterelement mittels des zugehörigen Stützlagers mit dem ersten Mutterelement axial fluchtend unten am Rahmen befestigt ist, wobei beiden Mutterelementen jeweils ein am Rahmen befestigter Antriebsmotor, vorzugsweise Schrittmotor, zugeordnet ist, der über einen Zahnriemen mit einer an dem zugehörigen Mutterelement koaxial befestigten Riemenscheibe in Antriebsverbindung steht.

Im weiteren Verfolg der Erfindung kann am unteren Ende der durchgehend hohl ausgebildeten Spindel eine Drehdurchführung angebracht sein, durch welche hindurch Vakuum an die Einrichtung des Ladearms anlegbar und/oder Druckluft zu dieser Einrichtung führbar ist. Durch Nutzung der Spindel selbst als Zuführ- oder Leitorgan erfolgt somit auf einfache Weise die pneumatische Beaufschlagung der Einrichtung am Ladearm.

In einer vorteilhaften Ausgestaltung der Vorrichtung sind an dem Rahmen der Vorrichtung vorzugsweise zwei Magazine für Roh- und Fertigwerkstücke angebracht, deren Entnahme- und Absetzpositionen sich auf dem Schwenkkreis der Einrichtung des Ladearms befinden. In diesen Magazinen sind die zu bearbeitenden oder schon bearbeiteten Werkstücke so untergebracht, daß sie in die jeweilige Entnahmeposition hinein bzw. aus der Absetzposition heraus geführt werden können. Vorzugsweise handelt es sich bei beiden Magazinen um drehbare, ggf. auswechselbare Tellermagazine, die sich in symmetrischer Anordnung seitlich von und von der Vorderseite her gesehen vor der Spindel befinden, deren Drehachsen parallel zur Spindel ausgerichtet sind und denen jeweils ein am Rahmen befestigter, frei programmierbarer und indexierbarer Antrieb zugeordnet ist. Somit ist in vorteilhafter Weise eine gute Anpassungsfähigkeit an unterschiedlichste Werkstückgrößen und -geometrien gegeben. Als Alternative zu den Magazinen kann den jeweiligen Erfordernissen entsprechend ein Förderband für Rezept- bzw. Linsentransportkästen so bezüglich des Schwenkkreises der Einrichtung des Ladearms angeordnet sein, daß mittels der Einrichtung des Ladearms Roh- und Fertigwerkstücke aus einem mittels des Förderbands entsprechend positionierten Kasten entnehmbar bzw. in diesen einsetzbar sind.

Den jeweiligen Erfordernissen entsprechend kann ferner zwischen den beiden weiter oben erwähnten Magazinen eine mit ihrer Mitte auf dem Schwenkkreis der Einrichtung des Ladearms befindliche Zentrierstation für die Werkstücke am Rahmen angebracht sein. Mit Hilfe einer solchen an sich bekannten Zentrierstation können toleranzbehaftete Werkstücke nach Entnahme aus dem Rohteilmagazin vorzentriert werden, um ein exaktes Einlegen des Werkstücks in das Futter der Werkstückspindel zu ermöglichen.

Auch kann die Vorrichtung eine am Rahmen auf dem Schwenkkreis der Einrichtung des Ladearms befindlich angebrachte Werkstückwendeeinrichtung aufweisen. Dadurch ist es möglich, die Vorrichtung auch zur Beschickung einer Optikmaschine für beidseitige Flächenbearbeitung am Werkstück einzusetzen.

Schließlich kann in Weiterführung des Erfindungsgedankens der Ladearm als V-förmiger Doppelarm ausgebildet sein, mit jeweils an den Armenden angebrachten, auf demselben Schwenkkreis befindlichen Einrichtungen zum Aufnehmen und Absetzen von Werkstücken, die unabhängig voneinander mit einer Vakuum- und/oder Druckluftquelle verbindbar sind. Durch diese Maßnahme kann ein besonders schneller Werkstückwechsel realisiert werden, beispielsweise indem die an dem einen Armende befindliche Einrichtung ein Rohwerkstück und die am anderen Armende befindliche Einrichtung ein Fertigwerkstück transportieren. In diesem Fall sind durch die vorzugsweise hohl ausgebildete Spindel zwei getrennte Pneumatikleitungen zu führen, um die beiden Einrichtungen an den Armenden zu unterschiedlichen Zeitpunkten beaufschlagen zu können. Zu diesem Zweck kann in die Spindel ein Rohr ggf. in konzentrischer Anordnung zur Spindel eingefügt werden, wobei der Innenraum des Rohrs und der Ringraum zwischen Außenumfangsfläche des Rohrs und Spindelinnenwand voneinander getrennt über die Drehdurchführung mit Vakuum und/oder Druckluft beaufschlagbar sind.

### KURZE BESCHREIBUNG DER ZEICHNUNGEN

Im folgenden wird die Erfindung anhand eines bevorzugten Ausführungsbeispiels unter Bezugnahme auf die beigefügte schematische Zeichnung näher erläutert. Darin zeigen:
- Fig. 1: eine Vertikalschnittansicht einer erfindungsgemäßen Vorrichtung entlang der Schnittverlaufslinie I-I in Fig. 2, welche an eine Optikmaschine angedockt ist, von der lediglich ein Teilbereich abgebrochen dargestellt ist,
- Fig. 2: eine teilweise aufgebrochene Vorderansicht der Vorrichtung gemäß Fig. 1, wobei der Ladearm der Vorrichtung an seinem Ende eine gegenüber der Fig. 1 anders ausgebildete Einrichtung zum Aufnehmen und zum Absetzen von Werkstücken trägt, und
- Fig. 3: eine abgebrochene Draufsicht auf die Vorrichtung gemäß Fig. 1, wobei oberhalb der Magazine zusätzlich noch eine Quertraverse vorgesehen ist, welche einstellbare Arme zur Orientierung von im linken Magazin befindlichem Schüttgut auflagert.

### DETAILLIERTE BESCHREIBUNG EINES AUSFÜHRUNGSBEISPIELS

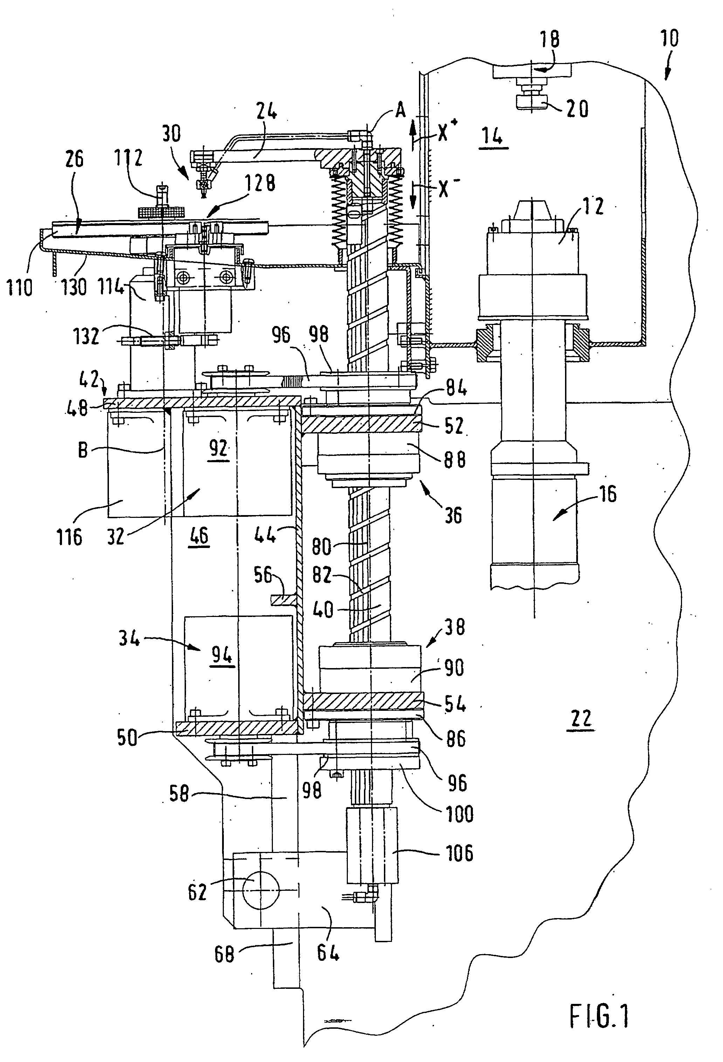

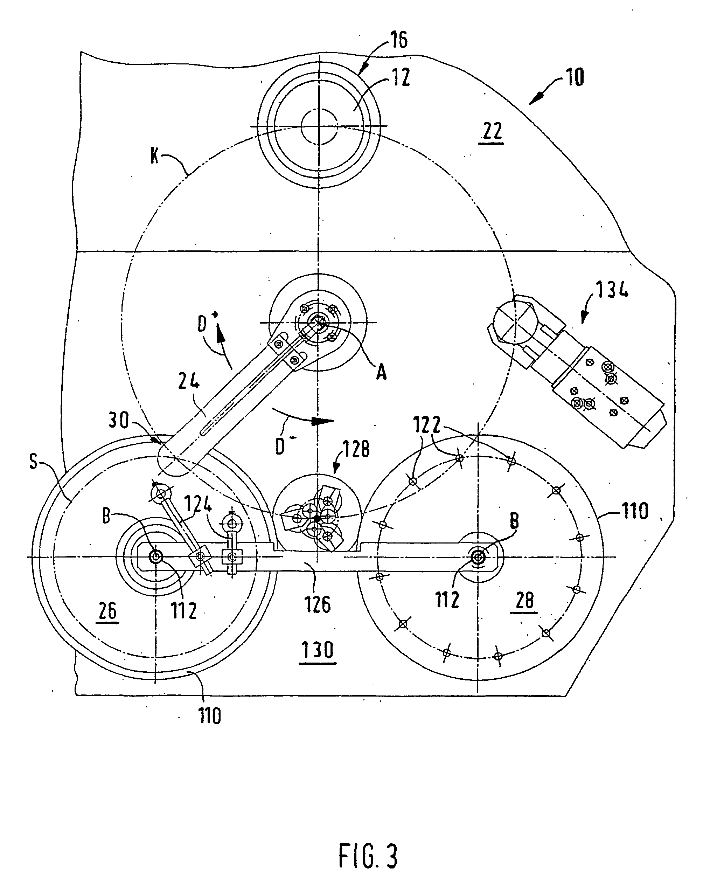

Die Figuren zeigen den Einsatz einer Vorrichtung zum Laden und Entladen optischer Werkstücke an der Vorderseite einer Optikmaschine 10, im dargestellten Ausführungsbeispiel einer Schleifmaschine für optische Einzellinsen. Die Optikmaschine 10 hat gemäß den Fig. 1 und 3 eine vertikal verlaufende, mit einer Werkstückaufnahme bzw. Spannzange 12 in einen Bearbeitungsbereich 14 der Optikmaschine 10 hineinragende Werkstückspindel 16. Die Werkstückspindel 16 ist ebenso wie eine der Werkstückspindel 16 im Bearbeitungsbereich 14 gegenüberstehende Werkzeugspindel 18, die im dargestellten Ausführungsbeispiel ein Topfwerkzeug 20 trägt, auf in den Figuren nicht dargestellte Weise in einem Maschinengestell 22 der Optikmaschine 10 gelagert.

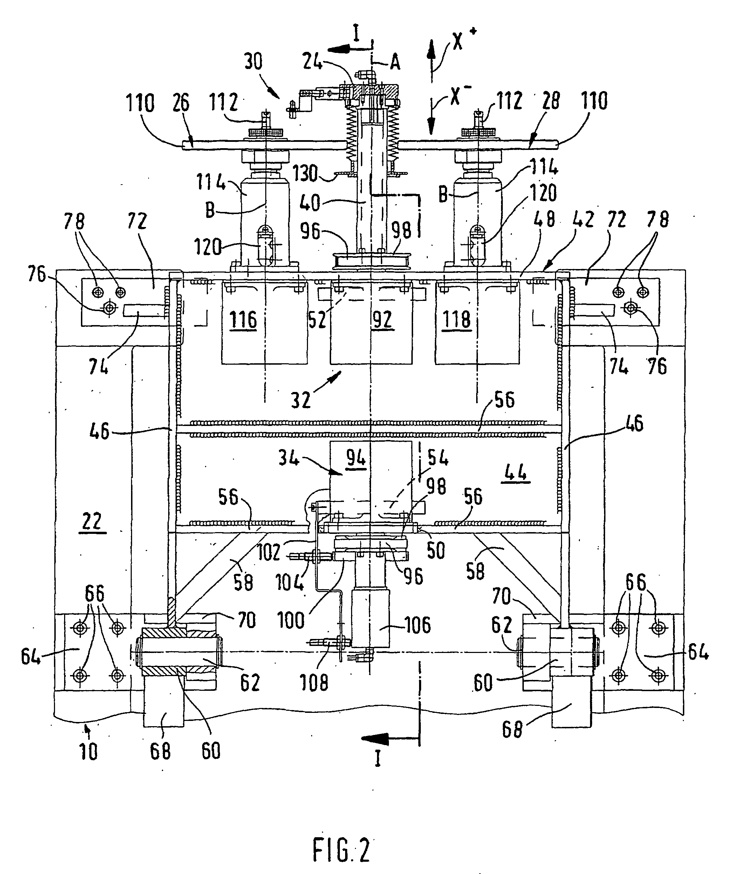

An das Maschinengestell 22 ist auf noch zu beschreibende Weise die Vorrichtung zum Laden und Entladen optischer Werkstücke angedockt, welche einen um eine Achse A schwenkbar angetriebenen Ladearm 24 aufweist. Der Ladearm 24 ist in gesteuerten Bewegungsabläufen zwischen mindestens einem, im dargestellten Ausführungsbeispiel zwei Werkstückmagazinen 26, 28 und der Bearbeitungsposition auf der Optikmaschine 10, d.h. einer in dem Bearbeitungsbereich 14 befindlichen Position zwischen der Werkstückspindel 16 und der Werkzeugspindel 18 schwenkbar. Am äußeren Ende des Ladearms 24 ist eine Einrichtung 30 zum Aufnehmen und zum Absetzen von Werkstücken vorgesehen, die - wie in Fig. 1 dargestellt - ein vakuumbetriebenes Saugelement oder auch - wie in Fig. 2 gezeigt - ein druckluftbetriebenes Greif- oder Spannelement aufweisen kann. Diese Elemente sind prinzipiell bekannt und werden deshalb nicht näher beschrieben. Wesentlich ist, daß die Schwenkachse A des Ladearms 24 die Mittelachse einer in beiden Drehrichtungen D⁺ bzw. D⁻ (vergl. Fig. 3) drehend und in beiden Achsrichtungen X⁺ bzw. X⁻ (siehe Fig. 1 und 2) linear hubbeweglich durch Antriebselemente 32, 34 antreibbaren sowie dreh- und verschiebbar in Führungselementen 36, 38 geführten Spindel 40 ist, an deren oberen Ende der Ladearm 24 befestigt ist, wie noch näher erläutert werden wird.

Wie deutlich den Fig. 1 und 2 zu entnehmen ist, hat die hier modular aufgebaute Vorrichtung einen als Schweißkonstruktion ausgebildeten Rahmen 42, an dem die Spindel 40 mit dem Ladearm 24, ihren Antriebselementen 32 bzw. 34 und ihren Führungselementen 36 bzw. 38 angebracht ist. Der Rahmen 42 ist als autarker Systemträger an eine beliebige Optikmaschine 10 in definierter Lage zu der Werkstückspindel 16 der Optikmaschine 10 so andockbar, daß sich die Mittelachse der Werkstückspindel 16 der Optikmaschine 10 auf dem Schwenkkreis K der Einrichtung 30 des Ladearms 24 befindet.

Gemäß den Fig. 1 und 2 hat der außerordentlich stabil ausgebildete Rahmen 42 eine vertikal verlaufende Wand 44, die über die gesamte Breite des Rahmens 42 geht und in Fig. 2 zu beiden Seiten mit jeweils einer Seitenwange 46 verschweißt ist. Die Wand 44 ist weiterhin an ihrem in den Fig. 1 und 2 oberen Ende mit einem sich von der Wand 44 horizontal nach vorne erstreckenden, über die gesamte Breite des Rahmens 42 verlaufenden Flanschabschnitt 48 für u.a. das obere Antriebselement 32 der Spindel 40 verschweißt, während am unteren Ende der Wand 44 ein sich ebenfalls horizontal nach vorne erstreckender, schmalerer Flanschabschnitt 50 für das untere Antriebselement 34 der Spindel 40 angeschweißt ist. Auf der Rückseite der Wand 44 ist ferner nahe dem oberen bzw. unteren Ende der Wand 44 jeweils ein in Fig. 2 gestrichelt dargestellter, ebenfalls horizontal verlaufender Flanschabschnitt 52 bzw. 54 für das obere bzw. untere Führungselement 36, 38 der Spindel 40 angeschweißt. Die Wand 44 ist schließlich mittels Verstärkungsrippen 56 ausgesteift.

Die mittels in Fig. 2 diagonal verlaufenden Versteifungselementen 58 gegenüber den unteren Verstärkungsrippen 56 an der Wand 44 ausgesteiften, schmaleren unteren Enden der Seitenwangen 46 sind zur Ausbildung von Schwenklagern am unteren Ende des Rahmens 42 mit Hülsenabschnitten 60 versehen, welche von Schwenkzapfen 62 durchgriffen werden. Die Schwenkzapfen 62 sind drehbar an Lagerböcken 64 gelagert, welche mittels Schrauben 66 fest mit dem Maschinengestell 22 der Optikmaschine 10 verbunden sind. An den Hülsenabschnitten 60 sind schließlich Anschläge 68 befestigt, welche mit an den Lagerböcken 64 angebrachten Leisten 70 zusammenwirken, um ein weiteres Verschwenken des Rahmens 42 um die Schwenkzapfen 62 gegen den Uhrzeigersinn in Fig. 1 zu verhindern, wenn der Rahmen 42 etwa für Wartungsarbeiten an der Werkstückspindel 16 bereits in eine im wesentlichen horizontale Lage verschwenkt wurde.

Wie die Fig. 2 zeigt, sind am oberen Ende des Rahmens 42 zu beiden Seiten Ohrenabschnitte 72 vorgesehen, welche an der jeweils zugehörigen Seitenwange 46 befestigt und gegenüber dieser mit jeweils einem Versteifungselement 74 abgestützt sind. Zur Herbeiführung der aus der Fig. 1 ersichtlichen Achsparallelität zwischen der Spindel 40 und der Werkstückspindel 16 der Optikmaschine 10 sind justierbare Anschläge in Form von Stellschrauben 76 vorhanden, die in zugeordnete Gewindebohrungen in den Ohrenabschnitten 72 eingeschraubt sind. Zur Lagefixierung des Rahmens 42 nach Einstellung der Stellschrauben 76 sind die Ohrenabschnitte 72 mit dem Maschinengestell 22 der Optikmaschine 10 mittels Schrauben 78 verschraubt. Es ist ersichtlich, daß der Rahmen 42 etwa für Wartungszwecke an der Optikmaschine 10 nach Lösen der Schrauben 78 um die Schwenkzapfen 62 nach vorne bzw. in Fig. 1 gegen den Uhrzeigersinn vom Maschinengestell 22 weggeschwenkt werden kann, bis, wie oben bereits erwähnt, die Anschläge 68 des Rahmens 42 an den Leisten 70 der Lagerböcke 64 zur Anlage gelangen.

Wie in Fig. 1 gut zu erkennen ist, ist die Spindel 40 über ihren Hubweg durchgehend sowohl als Keilwelle (Keilnuten 80) als auch als Gewindespindel (Gewinde 82) ausgebildet und durch zwei mit gegenseitigem Vertikalabstand über Stützlager 84, 86 ortsfest angebrachte, unterschiedliche, die Führungselemente 36 bzw. 38 bildende und an ihren Stützlagern 84 bzw. 86 drehbar gelagerte Mutterelemente 88 und 90 hindurchgeführt. Hierbei greift eines der Mutterelemente 88, 90 mit der Keilwelle (Keilnuten 80) ein, während das andere der Mutterelemente 88, 90 mit der Gewindespindel (Gewinde 82) eingreift, wobei die Mutterelemente 88, 90 über getrennte Antriebselemente 32, 34 einzeln oder gleichzeitig, gegenläufig oder gleichläufig drehend antreibbar sind. Je nachdem, ob die Mutterelemente 88, 90 einzeln oder gleichzeitig, gegenläufig oder gleichläufig angetrieben werden, erfolgt eine axiale Hub- (X⁺) oder Absenkbewegung (X⁻), eine radiale Schwenkbewegung im (D⁺) oder gegen den Uhrzeigersinn (D⁻) oder eine überlagerte Bewegung, d.h. eine Spiralbewegung des starr am oberen Ende der Spindel 40 befestigten Ladearms 24. Dieser Antrieb bietet somit gleichzeitig die Funktionen einer Kugelumlaufspindel und einer Keilwellenführung.

Gemäß den Fig. 1 und 2 ist das erste 88 der beiden Mutterelemente 88, 90 mittels des zugehörigen Stützlagers 84 oben am Rahmen 42, nämlich am Flanschabschnitt 52 befestigt, während das zweite Mutterelement 90 mittels des zugehörigen Stützlagers 86 mit dem ersten Mutterelement 88 axial fluchtend unten am Rahmen 42, nämlich am Flanschabschnitt 54 befestigt ist. Beiden Mutterelementen 88, 90 ist jeweils ein am Rahmen 42, genauer am Flanschabschnitt 48 bzw. 50 des Rahmens 42 befestigter, das jeweilige Antriebselement 32, 34 bildender Antriebsmotor 92, 94 zugeordnet, bei dem es sich vorzugsweise um einen Schrittmotor handelt. Der jeweilige Antriebsmotor 92, 94 steht über einen Zahnriemen 96 mit einer an dem zugehörigen Mutterelement 88 bzw. 90 koaxial befestigten Riemenscheibe 98 in Antriebsverbindung. Zu erwähnen ist in diesem Zusammenhang noch, daß unterhalb der in den Fig. 1 und 2 unteren Riemenscheibe 98 eine Nockenscheibe 100 befestigt ist, der ein mittels eines Halteblechs 102 am Flanschabschnitt 54 des Rahmens 42 angebrachter Induktivtaster 104 zugeordnet ist, welcher zur Steuerung der Vorrichtung der Ermittlung eines Referenzwerts für die Winkelposition der Spindel 40 dient.

Am unteren Ende der durchgehend hohl ausgebildeten Spindel 40 ist eine Drehdurchführung 106 angebracht, durch welche hindurch je nach Ausbildung der am Ladearm 24 vorgesehenen Einrichtung 30 zum Aufnehmen und zum Absetzen von Werkstücken Vakuum an die Einrichtung 30 anlegbar und/oder Druckluft zu dieser Einrichtung 30 führbar ist. Der Drehdurchführung 106 gegenüberliegend ist ein weiterer Induktivtaster 108 am Halteblech 102 befestigt, welcher zur Steuerung der Vorrichtung der Ermittlung eines Referenzwerts für die Hubposition der Spindel 40 dient.

Wie insbesondere die Fig. 3 zeigt, sind an dem Rahmen 42 die zwei Magazine 26, 28 für Roh- und Fertigwerkstücke angebracht, deren Entnahme- und Absetzpositionen sich auf dem Schwenkkreis K der Einrichtung 30 des Ladearms 24 befinden. Beide Werkstückmagazine 26, 28 sind als drehbare Tellermagazine ausgebildet, mit ggf. auswechselbaren Magazintellern 110, welche jeweils im wesentlichen aus einer dünnen, lasergeschnittenen Blechplatte bestehen, die auf den jeweiligen Werkstückdurchmesser abgestimmt preiswert herstellbar ist. Jeder Magazinteller 110 ist an einer Welle 112 befestigt, welche in einem zugeordneten Lagergehäuse 114 mittels nicht dargestellter Lager drehbar gelagert ist, wie insbesondere die Fig. 2 zeigt. Die Lagergehäuse 114 selbst sind oben am Flanschabschnitt 48 des Rahmens 42 derart angeflanscht, daß die Werkstückmagazine 26, 28 sich in symmetrischer Anordnung seitlich von und von der Vorderseite her gesehen vor der Spindel 40 befinden, während die Drehachsen B der Werkstückmagazine 26, 28 parallel zur Spindel 40 ausgerichtet sind. Jedem Werkstückmagazin 26, 28 ist ein an der Unterseite des Flanschabschnitts 48 des Rahmens 42 befestigter, frei programmierbarer und indexierbarer Antrieb 116, 118 zugeordnet, mit dem die jeweilige Welle 112 über eine nicht näher dargestellte Kupplung wirkverbunden ist, welche über eine Aussparung 120 im jeweiligen Lagergehäuse 114 zugänglich ist.

In der Fig. 3 sind zwei verschiedene Ausführungen der Werkstückmagazine 26, 28 dargestellt. Während an dem rechten, zur Aufnahme von Fertigwerkstücken vorgesehenen Werkstückmagazin 28 den Fertigwerkstücken jeweils eine definierte Ablageposition 122 zugeordnet ist, ist das linke, zur Aufnahme von Rohwerkstücken vorgesehene Werkstückmagazin 26 als Schüttgutmagazin ausgebildet. Hierin werden kleine, nicht-orientierte Linsen geladen, welche bei einer Drehung des Magazintellers 110 mittels Abweis- oder Ausrichtarmen 124, die an einer an den Wellen 112 gelagerten Quertraverse 126 einstellbar befestigt sind, zur Vorpositionierung für die Aufnahme durch die Einrichtung 30 am Ladearm 24 auf einen Aufnahmekreis S am Magazinteller 110 geleitet werden. Für den Fachmann ist ersichtlich, daß infolge der Flexibilität der Spindel 40, d.h. deren Vermögen, mit dem Ladearm 24 eine beliebige Position auf dem Schwenkkreis K anzufahren, auch andere, z.B. größere Werkstückmagazine Verwendung finden können.

Die Fig. 1 und 3 zeigen schließlich noch, daß den jeweiligen Erfordernissen entsprechend zwischen den beiden Werkstückmagazinen 26, 28 eine mit ihrer Mitte auf dem Schwenkkreis K der Einrichtung 30 des Ladearms 24 befindliche Zentrierstation 128 für die Werkstücke am Rahmen 42 bzw. an einer mit dem Rahmen 42 fest verbundenen Blechabdeckung 130 angebracht sein kann. Hierbei kann es sich um einen handelsüblichen, pneumatisch getriebenen 3-Finger-Greifer handeln, dessen Zustand (geöffnet bzw. geschlossen) für die Steuerung der Vorrichtung mittels eines in Fig. 1 gezeigten Induktivtasters 132 überwachbar ist. Weiterhin kann gemäß Fig. 3 am Rahmen 42 bzw. an der Blechabdeckung 130 des Rahmens 42 eine Werkstückwendeeinrichtung 134 auf dem Schwenkkreis K der Einrichtung 30 des Ladearms 24 befindlich angebracht sein, die für eine beidseitige Flächenbearbeitung ein Wenden der zu bearbeitenden Linse, d.h. ein Drehen um 180° gestattet. Derartige Wendeeinrichtungen sind im Stand der Technik hinlänglich bekannt, so daß deren Aufbau hier nicht näher beschrieben werden muß.

Das Programmieren der obigen, in allen Bewegungen vorzugsweise CNC-gesteuerten Vorrichtung geschieht auf einfache Weise mittels einer SPS mit Dialog-Menü, Tastatur und Anzeige (nicht dargestellt). Hierdurch lassen sich verschiedene, einmal bevorzugt durch Teach-In-Betrieb programmierte Lade- bzw. Entladevorgänge abspeichern und jederzeit wieder aufrufen. Grundsätzlich ist es möglich auch die Linsenhöhe im Teach-In-Betrieb mit entsprechender Sensierung durch das am Antrieb auftretende Drehmoment zu erfassen und die entsprechende Höhenposition für etwa die Linsenaufnahme einzulernen. Insgesamt gestattet die wie beschrieben ausgebildete Vorrichtung mit einer entsprechenden Steuerung eine Optimierung aller Beschleunigungs- und Bremsrampen der über der Zeit aufgetragenen Lade- bzw. Entladebewegungen entsprechend dem jeweiligen Werkstückgewicht und den jeweiligen Haltekräften der Einrichtung am Ladearm, wodurch sowohl ein sehr schneller Ladeprozeß als auch ein exaktes, zuverlässiges und wiederholbares Laden bzw. Entladen gewährleistet werden kann. Durch die mittels des Rahmens geschaffene Möglichkeit, die beschriebene Vorrichtung an verschiedenen Optikmaschinen auch nachträglich einzusetzen, ergibt sich eine sehr hohe Flexibilität ebenfalls in Bezug auf die Werkstückgröße (so können etwa Linsen von unter 1 mm Durchmesser bis über 100 mm Durchmesser problemlos ge- bzw. entladen werden) und somit ein sehr großer Anwendungsbereich bei kleinen Losgrößen wie auch in der Massenproduktion.

Es wird eine Vorrichtung zum Laden und Entladen optischer Werkstücke, insbesondere optischer Linsen, für eine Optikmaschine offenbart. Die Vorrichtung hat einen um eine Achse schwenkbar angetriebenen Ladearm, der in gesteuerten Bewegungsabläufen zwischen einem Werkstückmagazin und der Bearbeitungsposition auf der Optikmaschine schwenkbar ist und an seinem äußeren Ende mit einer Einrichtung zum Aufnehmen und zum Absetzen von Werkstücken versehen ist. Erfindungsgemäß ist die Schwenkachse des Ladearms die Mittelachse einer in beiden Drehrichtungen drehend und in beiden Achsrichtungen linear hubbeweglich durch Antriebselemente antreibbaren sowie dreh- und verschiebbar in Führungselementen geführten Spindel; an welcher der Ladearm befestigt ist. Dabei ist die Spindel sowohl als Keilwelle als auch als Gewindespindel ausgebildet und durch zwei ortsfest angebrachte, die Führungselemente bildende und drehbar gelagerte Mutterelemente hindurchgeführt, von denen ein Mutterelement mit der Keilwelle und das andere Mutterelement mit der Gewindespindel eingreift, wobei die Mutterelemente über die Antriebselemente einzeln oder gleichzeitig, gegenläufig oder gleichläufig drehend antreibbar sind. Im Ergebnis wird eine Vorrichtung geschaffen, welche unter Vermeidung der Nachteile bisheriger Ladesysteme einen kompakten und einfachen Aufbau besitzt sowie mit hoher Lade- und Entladegenauigkeit zuverlässig und schnell arbeitet.

### BEZUGSZEICHENLISTE:

- 10: Optikmaschine
- 12: Werkstückaufnahme
- 14: Bearbeitungsbereich
- 16: Werkstückspindel
- 18: Werkzeugspindel
- 20: Topfwerkzeug
- 22: Maschinengestell
- 24: Ladearm
- 26: Werkstückmagazin
- 28: Werkstückmagazin
- 30: Einrichtung zum Aufnehmen/Absetzen von Werkstücken
- 32: Antriebselement
- 34: Antriebselement
- 36: Führungselement
- 38: Führungselement
- 40: Spindel
- 42: Rahmen
- 44: Wand
- 46: Seitenwange
- 48: Flanschabschnitt
- 50: Flanschabschnitt
- 52: Flanschabschnitt
- 54: Flanschabschnitt
- 56: Verstärkungsrippe
- 58: Versteifungselement
- 60: Hülsenabschnitt
- 62: Schwenkzapfen
- 64: Lagerbock
- 66: Schraube
- 68: Anschlag
- 70: Leiste
- 72: Ohrenabschnitt
- 74: Versteifungselement
- 76: Stellschraube
- 78: Schraube
- 80: Keilnut
- 82: Gewinde
- 84: Stützlager
- 86: Stützlager
- 88: Mutterelement
- 90: Mutterelement
- 92: Antriebsmotor
- 94: Antriebsmotor
- 96: Zahnriemen
- 98: Riemenscheibe
- 100: Nockenscheibe
- 102: Halteblech
- 104: Induktivtaster
- 106: Drehdurchführung
- 108: Induktivtaster
- 110: Magazinteller
- 112: Welle
- 114: Lagergehäuse
- 116: Antrieb
- 118: Antrieb
- 120: Aussparung
- 122: Ablageposition
- 124: Ausrichtarm
- 126: Quertraverse
- 128: Zentrierstation
- 130: Blechabdeckung
- 132: Induktivtaster
- 134: Werkstückwendeeinrichtung

- A =: Schwenkachse
- D⁺ =: Drehrichtung
- K =: Schwenkkreis
- X⁺ =: Achsrichtung

- B =: Drehachse
- D⁻ =: Drehrichtung
- S =: Aufnahmekreis
- X⁻ =: Achsrichtung

## Patentansprüche

1. Vorrichtung zum Laden und Entladen optischer Werkstücke, insbesondere optischer Linsen, für eine Optikmaschine (10), mit einem um eine Achse (A) schwenkbar angetriebenen Ladearm (24), der in gesteuerten Bewegungsabläufen zwischen einem Werkstückmagazin (26, 28) und der Bearbeitungsposition auf der Optikmaschine (10) schwenkbar ist und an seinem äußeren Ende mit einer Einrichtung (30) zum Aufnehmen und zum Absetzen von Werkstücken versehen ist, wobei die Schwenkachse (A) des Ladearms (24) die Mittelachse einer in beiden Drehrichtungen (D⁺, D⁻) drehend und in beiden Achsrichtungen (X⁺, X⁻) linear hubbeweglich durch Antriebselemente (32, 34) antreibbaren sowie dreh- und verschiebbar in Führungselementen (36, 38) geführten Spindel (40) ist, an welcher der Ladearm (24) befestigt ist, wofür die Spindel (40) sowohl als Keilwelle (Keilnuten 80) als auch als Gewindespindel (Gewinde 82) ausgebildet ist und durch zwei ortsfest angebrachte, die Führungselemente (36, 38) bildende und drehbar gelagerte Mutterelemente (88, 90) hindurchgeführt ist, von denen ein Mutterelement mit der Keilwelle (Keilnuten 80) und das andere Mutterelement mit der Gewindespindel (Gewinde 82) eingreift, wobei die Mutterelemente (88, 90) uber die Antriebselemente (32, 34) einzeln oder gleichzeitig, gegenläufig oder gleichläufig drehend antreibbar sind und wobei die Spindel (40) mit dem Ladearm (24), ihren Antriebselementen (32, 34) und ihren Führungselementen (36, 38) an einem autarken Systemträger (Rahmen 42) angebracht ist, der in zu der Werkstückspindel (16) der Optikmaschine (10) definierter und justierbarer Lage an der Optikmaschine (10) andockbar ist.

2. Vorrichtung nach Anspruch 1, wobei ein den autarken Systemträger bildender Rahmen (42) so an der Optikmaschine (10) andockbar ist, daß sich die Werkstückspindel (16) der Optikmaschine (10) auf dem Schwenkkreis (K) der Einrichtung (30) des Ladearms (24) befindet.

3. Vorrichtung nach Anspruch 2, wobei der Rahmen (42) an seinem unteren Ende über Schwenkzapfen (62) und an seinem oberen Ende über zur Herbeiführung der Achsparallelität zwischen der Spindel (40) und der Werkstückspindel (16) der Optikmaschine (10) justierbare Anschläge (76) und Schrauben (78) an die Optikmaschine (10) andockbar ist.

4. Vorrichtung nach Anspruch 2 oder 3, wobei das erste der beiden Mutterelemente (88) mittels eines zugehörigen Stützlagers (84) oben am Rahmen (42) befestigt ist, während das zweite Mutterelement (90) mittels eines zugehörigen Stützlagers (86) mit dem ersten Mutterelement (88) axial fluchtend unten am Rahmen (42) befestigt ist, wobei beiden Mutterelementen (88, 90) jeweils ein am Rahmen (42) befestigter Antriebsmotor (92, 94), vorzugsweise Schrittmotor, zugeordnet ist, der über einen Zahnriemen (96) mit einer an dem zugehörigen Mutterelement (88, 90) koaxial befestigten Riemenscheibe (98) in Antriebsverbindung steht.

5. Vorrichtung nach einem der vorhergehenden Ansprüche, wobei am unteren Ende der durchgehend hohl ausgebildeten Spindel (40) eine Drehdurchführung (106) angebracht ist, durch welche hindurch Vakuum an die Einrichtung (30) des Ladearms (24) anlegbar und/oder Druckluft zu dieser Einrichtung (30) führbar ist.

6. Vorrichtung nach einem der Ansprüche 2 bis 5, wobei an dem Rahmen (42) zwei Magazine (26, 28) für Roh- und Fertigwerkstücke angebracht sind, deren Entnahme- und Absetzpositionen sich auf dem Schwenkkreis (K) der Einrichtung (30) des Ladearms (24) befinden.

7. Vorrichtung nach Anspruch 6, wobei die beiden Magazine (26, 28) als drehbare, ggf. auswechselbare Tellermagazine ausgebildet sind, die sich in symmetrischer Anordnung seitlich von und von der Vorderseite her gesehen vor der Spindel (40) befinden, deren Drehachsen (B) parallel zur Spindel (40) ausgerichtet sind und denen jeweils ein am Rahmen (42) befestigter, frei programmierbarer und indexierbarer Antrieb (116, 118) zugeordnet ist.

8. Vorrichtung nach Anspruch 6 oder 7, wobei zwischen den beiden Magazinen (26, 28) eine mit ihrer Mitte auf dem Schwenkkreis (K) der Einrichtung (30) des Ladearms (24) befindliche Zentrierstation (128) für die Werkstücke am Rahmen (42) angebracht ist.

9. Vorrichtung nach einem der Ansprüche 2 bis 8, wobei am Rahmen (42) eine Werkstückwendeeinrichtung (134) auf dem Schwenkkreis (K) der Einrichtung (30) des Ladearms (24) befindlich angebracht ist.

10. Vorrichtung nach einem der vorhergehenden Ansprüche, wobei der Ladearm als V-förmiger Doppelarm ausgebildet ist, mit jeweils an den Armenden angebrachten, auf demselben Schwenkkreis befindlichen Einrichtungen zum Aufnehmen und Absetzen von Werkstücken, die unabhängig voneinander mit einer Vakuum- und/oder Druckluftquelle verbindbar sind.

## Claims

1. Device for loading and unloading optical workpieces, in particular optical lenses, for a lens machine (10) with a loading arm (24) driven swivellable about an axis (A) which can be swiveled in controlled movement processes between a workpiece magazine (26, 28) and the machining position on the lens machine (10), and at its outer end is fitted with a device (30) for picking up and depositing workpieces, where the swivel axis (A) of the loading arm (24) is the center axis of a spindle (40) rotatable in both directions of rotation (D⁺, D⁻) and drivable mobile in linear strokes in both axial directions (X⁺, X⁻) by drive elements (32, 34) and guided rotatably and displaceably in guide elements (36, 38), on which spindle is attached the loading arm (24), for which the spindle (40) is formed both as a splined shaft (keyways 80) and as a threaded spindle (thread 82) and is guided through two fixed location, rotatably mounted nut elements (88, 90) forming the guide elements (36, 38), of which one nut element engages with the splined shaft (keyways 90) and the other nut element with the threaded spindle (thread 82), where the nut elements (88, 90) can be driven via the drive elements (32, 34) individually or simultaneously, rotating in the same or opposite directions, and where the spindle (40) with its loading arm (24), drive elements (32, 34) and guide elements (36, 38) is mounted on a self-contained system carrier (frame 42) which can dock on the lens machine (10) in a defined and adjustable position in relation to the workpiece spindle (16) of the lens machine (10).

2. Device according to claim 1, where a frame (40) forming the self-contained system carrier can be docked on the lens machine (10) so that the workpiece spindle (16) of the lens machine (10) lies on the swivel circle (K) of the device (30) of the loading arm (24).

3. Device according to claim 2, where the frame (42) can be docked onto the lens machine (10) at its lower end via swivel pins (62) and at its upper end via screws (78) and stops (76) which can be adjusted to achieve the axial parallelism between the spindle (40) and the workpiece spindle (16) of the lens machine (10).

4. Device according to claim 2 or 3, where the first of the two nut elements (88) is attached by means of an associated support bearing (84) to the top of the frame (42) whereas the second nut element (90) is attached by means of an associated support bearing (86) to the bottom of the frame (42) axially aligned with the first nut element (88), where to each nut element (88, 90) is allocated a drive motor (92, 94), preferably a stepper motor, which is attached to the frame (42) and via a toothed belt (96) is in drive connection with a pulley (98) attached coaxially to the associated nut element (88, 90).

5. Device according to one of the preceding claims, where at the lower end of the totally hollow spindle (40) is arranged a rotary passage (106) through which a vacuum can be applied and/or compressed air supplied to the device (30) of the loading arm (24).

6. Device according to one of the claims 2 to 5, where attached to the frame (42) are two magazines (26, 28) for blanks and finished workpieces, the collection and deposit positions of which lie on the swivel circle (K) of the device (30) of the loading arm (24).

7. Device according to claim 6, where the two magazines (26, 28) are formed as rotatable, where applicable exchangeable plate magazines which are arranged symmetrically at the side and - viewed from the front - in front of the spindle (40), the axes of rotation (B) of which are aligned parallel to the spindle (40) and to each of which is allocated a freely programmable, indexable drive (116, 118) attached to the frame (42).

8. Device according to claim 6 or 7, where between the two magazines (26, 28) is arranged on the frame (42) a centering station (128) for the workpieces which has its center on the swivel circle (K) of the device (30) of the loading arm (24).

9. Device according to one of the claims 2 to 8, where on the frame (42) is arranged a workpiece turning device (134) which lies on the swivel circle (K) of the device (30) of the loading arm (24).

10. Device according to one of the preceding claims, where the loading arm is formed as a V-shaped double arm with, arranged on each arm end on the same swivel circle, devices for picking up and depositing workpieces which can be connected with a vacuum and/or compressed air source independently of each other.

## Revendications

1. Dispositif pour charger et décharger des pièces optiques, notamment des lentilles optiques, dans une machine optique (10), comprenant un bras de chargement (24) entraîné en pivotement autour d'un axe (A), et qui peut pivoter selon des séquences de mouvement commandées entre un magasin de pièces (26, 28) et la position d'usinage sur la machine optique (10), et est équipé à son extrémité extérieure, d'un mécanisme (30) destiné à prélever et à déposer des pièces, l'axe de pivotement (A) du bras de chargement (24) étant l'axe central d'une broche (40) qui peut être entraînée par des éléments d'entraînement (32, 34) en rotation dans les deux sens de rotation (D⁺, D⁻) et linéairement dans les deux directions d'axe (X⁺, X⁻), et qui est guidée en rotation et de manière coulissante dans des éléments de guidage (36, 38), et sur laquelle est fixé le bras de chargement (24), ce pour quoi la broche (40) est réalisée aussi bien en tant qu'arbre cannelé (cannelures 80) qu'en tant que broche filetée (filetage 82) et traverse de manière guidée deux éléments d'écrou (88, 90) disposés en position fixe, formant les éléments de guidage (36, 38) et montés rotatifs, dont un élément d'écrou est en prise avec l'arbre cannelé (cannelures 80) et l'autre élément d'écrou avec la broche filetée (filetage 82), les éléments d'écrou (88, 90) pouvant être entraînés par les éléments d'entraînement (32, 34), individuellement ou simultanément, selon des sens opposés ou dans le même sens de rotation, et la broche (40) avec le bras de chargement (24), ses éléments d'entraînement (32, 34) et ses éléments de guidage (36, 38), étant rapportée sur un support de système (châssis 42) autonome, qui peut être amarré à la machine optique (10) dans une position définie et ajustable par rapport à la broche porte-pièce (16) de la machine optique (10).

2. Dispositif selon la revendication 1, d'après lequel un châssis (42) formant le système autonome peut être amarré à la machine optique (10) de façon telle, que la broche porte-pièce (16) de la machine optique (10) se trouve sur la trajectoire circulaire de pivotement (K) du mécanisme (30) du bras de chargement (24).

3. Dispositif selon la revendication 2, d'après lequel le châssis (42) peut être amarré à la machine optique (10), au niveau de son extrémité inférieure, par l'intermédiaire de tourillons de pivotement (62), et au niveau de son extrémité supérieure, par l'intermédiaire de butées (76) réglables et de vis (78) pour produire le parallélisme des axes entre la broche (40) et la broche porte-pièce (16) de la machine optique (10).

4. Dispositif selon la revendication 2 ou 3, d'après lequel le premier des deux éléments d'écrou (88) est fixé dans le haut du châssis (42) au moyen d'un palier de support (84) associé, tandis que le second élément d'écrou (90) est fixé dans le bas du châssis (42) au moyen d'un palier de support (86) associé, en étant aligné axialement avec le premier élément d'écrou (88), un moteur d'entraînement (92, 94), de préférence un moteur pas à pas, étant associé respectivement à chacun des deux éléments d'écrou (88, 90) et étant en liaison d'entraînement, par l'intermédiaire d'une courroie crantée (96), avec une poulie (98) fixée coaxialement à l'élément d'écrou (88, 90) respectivement associé.

5. Dispositif selon l'une des revendications précédentes, d'après lequel à l'extrémité inférieure de la broche (40) de configuration creuse sur toute sa longueur, est placé un dispositif de passage tournant (106) à travers lequel il est possible d'appliquer le vide au mécanisme (30) du bras de chargement (24) et/ou d'amener de l'air comprimé à ce mécanisme (30).

6. Dispositif selon l'une des revendications 2 à 5, d'après lequel sur le châssis (42) sont placés deux magasins (26, 28) pour pièces brutes et pièces finies, dont les positions de prélèvement et de dépôt se trouvent sur la trajectoire circulaire de pivotement (K) du mécanisme (30) du bras de chargement (24).

7. Dispositif selon la revendication 6, d'après lequel les deux magasins (26, 28) sont réalisés en tant que magasins tournants, à plateau, le cas échéant interchangeables, qui sont disposés latéralement à la broche selon un agencement symétrique et, vu à partir de l'avant, se trouvent devant la broche (40), dont les axes de rotation (B) sont orientés parallèlement à la broche (40), et à chacun desquels est associé un entraînement (116, 118) respectif, indexable et librement programmable.

8. Dispositif selon la revendication 6 ou 7, d'après lequel entre les deux magasins (26, 28), un poste de centrage (128) pour les pièces est monté sur le châssis (42), de façon à ce que son centre se situe sur la trajectoire circulaire de pivotement (K) du mécanisme (30) du bras de chargement (24).

9. Dispositif selon l'une des revendications 2 à 8, d'après lequel sur le châssis (42) est monté un dispositif de retournement de pièce (134) de manière à se trouver sur la trajectoire circulaire de pivotement (K) du mécanisme (30) du bras de chargement (24).

10. Dispositif selon l'une des revendications précédentes, d'après lequel le bras de chargement est réalisé sous forme de bras double en forme de V, comprenant, placés aux extrémités de bras respectives, des mécanismes se trouvant sur la même trajectoire de pivotement et destinés à prélever et à déposer des pièces, et pouvant être reliés indépendamment l'un de l'autre à une source de vide et/ou d'air comprimé.
